# EUROPÄISCHE PATENTSCHRIFT

(11) **EP 1 164 677 B1**
(45) Veröffentlichungstag und Bekanntmachung des Hinweises auf die Patenterteilung: **23.04.2008**
(21) Anmeldenummer: 00112860.2
(22) Anmeldetag: 17.06.2000
(51) Int. Cl.: H02G 3/22, F16L 5/08

(54) **Dichtpackung zum Hindurchführen von Leitungen durch eine Wand**
Sealed feedthrough for passing conduits through a wall
Traversée étanche pour le passage de tuyaux dans un mur

(43) Veröffentlichungstag der Anmeldung: 19.12.2001
(73) Patentinhaber: Hauff-Technik GmbH & Co. KG, 89542 Herbrechtingen (DE)
(72) Erfinder: Kurz, Ralf, 89537 Giengen (DE); Heck, Martin, D-89447 Zöschingen (DE)
(74) Vertreter: Dr. Weitzel & Partner

(56) Entgegenhaltungen:
- DE-U- 29 709 983
- DE-U- 29 723 073
- JP-A- 9 051 621
- US-A- 4 993 724

## Beschreibung

Die Erfindung betrifft eine Dichtpackung zum Hindurchführen von Leitungen wie Kabeln, Medienleitungen usw. durch die Öffnung einer Wand. Dabei werden unter dem Ausdruck "Leitungen" sowohl elektrische oder Kommunikationsleitungen verstanden als auch Leitungen für fließfähige Stoffe wie Gas oder Wasser. Nur beispielshalber wird auf DE 197 15 885 A1 verwiesen.

Eine solche Dichtpackung weist als wesentliches Element ein ringförmiges gummielastisches Dichtelement auf, dessen Außenkontur wenigstens annähernd der Kontur der Öffnung in der Wand entspricht. Durch das Dichtelement sind Spannschrauben hindurchgeführt. Hiermit läßt sich das Dichtelement stauchen, so dass es in der Öffnung der Wand verspannt wird. Die Schraubenköpfe liegen nicht unmittelbar an den Stirnflächen des Dichtelementes an. Vielmehr sind noch Spannringe zwischengefügt, die zum Dichtelement konzentrisch angeordnet sind und aus Stahl bestehen.

Das Dichtelement kann eine einzige Rohrleitung umfassen, beispielsweise eine Gasleitung. Es kann aber auch als kreisförmige Platte ausgeführt sein und zwei oder mehrere Bohrungen zum Hindurchführen zweier oder mehrerer Leitungen aufweisen.

An Dichtpackungen der genannten Art werden einerseits hohe Anforderungen an die Funktionssicherheit gestellt. Dies ist besonders bei Gasleitungen von größter Bedeutung. Zwecks Erzielens einer einwandfreien Dichtung ist es wichtig, daß die von den Spannringen auf das Dichtelement aufgebrachte Spannung über den gesamten Umfang gleich groß ist. Sind die Spannringe zu gering bemessen, so kommt es zu Durchbiegungen und damit über den Umfang des Dichtelementes gesehen ungleich starkes Stauchen. In diesem Falle besteht die Gefahr, daß das Dichtelement nicht auf seinem gesamten Umfang satt an der Leibung der Wandöffnung anliegt.

Andererseits handelt es sich bei Dichtpackungen der genannten Art um einen Massenartikel, der nur wenig kosten darf und der sich dem gemäß kostengünstig herstellen lassen soll.

DE 297 09 983 U beschreibt eine Dichtpackung gemäß dem Oberbegriff von Anspruch 1. Die Spannringe sind dabei Vollringe. Sie sind aus Blech hergestellt. Jeder Ring weist eine umlaufende Vertiefung auf, in welchem die Köpfe von Spannschrauben einführbar sind.

JP 09 051621 A weist eine Dichtpackung auf, umfassend ein gummielastisches Dichtelement, ferner Spannringe, die segmentiert sind. Die Dichtpackung ist aufklappbar. Sie bestehen aus massiven Segmentplatten.

Der Erfindung liegt die Aufgabe zugrunde, eine Dichtpackung der genannten Art derart zu gestalten, daß er absolut funktionssicher ist, und daß die Herstellungskosten geringer als diejenigen von herkömmlichen Dichtpackungen sind. Diese Aufgabe wird durch die Merkmale von Anspruch 1 gelöst.

Gemäß der Erfindung weisen die Spannringe L-Profil oder U-Profil oder Kasten-Profil auf. Diese Profile lassen sich einfach herstellen und verleihen den Spannringen eine hohe Steifigkeit bei geringem Materialaufwand, Dabei kann der Spannring aus Edelstrahlblech oder Baustahlblech oder verzinktem Blech bestehen.

Das weitere erfindungsgemäße Merkmal besteht darin, daß die Spannringe aus Ringsegmenten aufgebaut sind, somit nicht aus geschlossenen Ringen.

### Hieraus ergibt sich folgender Vorteil:

Häufig ist der Ringspalt zwischen der kreisrunden Laibung eines Wanddurchbruches und der äußeren Umfangsfläche des Dichtelementes relativ groß. Dies bedeutet, daß das Dichtelement mittels der Spannringe und der Spannschrauben relativ stark gestaucht werden muß. Das Material des gummielastischen Dichtelementes wird dabei entsprechend stark nach außen verdrängt, so daß es an der Laibung satt und dichtend anliegt. Sind die Spannringe entsprechend der Erfindung als Ringsegmente ausgeführt, so vermögen die Ringsegmente der Wanderbewegung des gummielastischen Materiales des Dichtelementes radial nach außen zu folgen.

Bei Vollringen ist dies nicht der Fall. Der volle Ring behält natürlich seinen relativ kleinen Durchmesser bei. Demgemäß wird auch die Spannkraft relativ nahe bei der Mittelachse der Bohrung aufgebracht, was bedeutet, daß zu wenig Spannkraft im Bereich des Außenumfanges des Dichtelementes aufgebracht wird.

Durch die Erfindung wird im einzelnen folgendes erzielt:
- Die erfindungsgemäßen Spannringe sind leichter und billiger als die bisher verwendeten massiven Spannringe.
- Die erfindungsgemäßen Spannringe sind jedoch mindestens so steif wie die herkömmlichen Spannringe.
- Die Spannkraft greift auch dann auf einem relativ großen Durchmesser und somit in Nähe der Mauerlaibung am Dichtelement an, wenn der Spalt zwischen der Mauerlaibung und der Mantelfläche des Dichtelementes relativ groß ist.
- Aufgrund der guten Steifigkeit läßt sich die Anzahl von Spannschrauben verringern, gegenüber herkömmlichen Spannringen.
- Das Profil des einzelnen Ringes kann derart gestaltet sein, daßin einem Axialschnitt gesehen - die Spannschrauben nicht über die Außenkante des oder der achsparallelen Schenkel überstehen.

Verwendet man für die Spannringe Kastenprofil, so wird das Profil mit Bohrungen zum Einbringen der Spannschrauben versehen.

Die Erfindung ist anhand der Zeichnung näher erläutert. Darin ist im einzelnen folgendes dargestellt:
- Figur 1: zeigt eine Dichtpackung in Draufsicht.
- Figur 2: zeigt die Dichtpackung gemäß Figur 1 in einer Schnittansicht gemäß der Schnittlinie A - A, jedoch um 30 Grad verdreht.
- Figur 3: zeigt eine Dichtpackung, die in eine Maueröffnung eingebaut ist.
- Figur 4: zeigt im vergrößerten Ausschnitt und im Axialschnitt einen Spannring mit L-Profil.
- Figur 5: zeigt - analog zu Figur 4 - einen Spannring mit U-Profil.
- Figur 6: zeigt - analog zu Figur 4 - einen Spannring mit Kastenprofil.
- Figur 7: zeigt - analog zu Figur 4 - einen Spannring mit einem abgewandelten U-Profil.
- Figur 8: zeigt in perspektivischer Darstellung ein Ringsegment mit einer Abzweigung.
- Figur 9: zeigt in Draufsicht eine Dichtpackung mit drei Spannringsegmenten gemäß Figur 8.

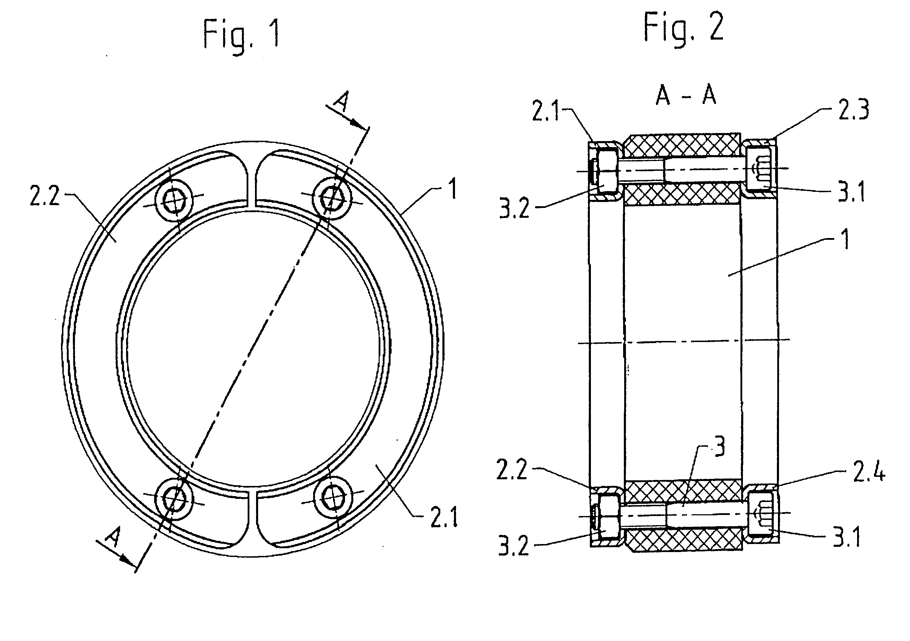

Die in den Figuren 1 und 2 gezeigte Dichtpackung weist ein gummielastisches Dichtelement 1 auf. Im vorliegenden Falle ist das Dichtelement 1 ringförmig.

An den beiden Stirnseiten des Dichtelementes 1 liegen Spannringe an. Die Spannringe sind als Ringsegemente 2.1, 2.2, 2.3 und 2.4 ausgebildet. Statt der hier dargestellten Zweiringsegmente ist es auch möglich, drei oder mehrere Ringsegmente vorzusehen.

Durch das Dichtelement 1 und die Spannringsegmente 2.1, 2.2, 2.3, 2.4 sind Spannschrauben 3 hindurchgeführt. Die Schrauben weisen Schraubenköpfe 3.1 mit Innensechskant auf sowie Muttern 3.2.

Wie man aus Figur 2 erkennt, haben die Spannringe U-Profil. Die Schraubenköpfe 3.1 und die Muttern 3.2 sind völlig im Profil versenkt. Auch die Schrauben 3 ragen in axialer Richtung nicht über die betreffenden Spannringsegmente hinaus - siehe Figur 2, linke Seite.

Im vorliegenden Falle ist das Dichtelement 1 ringförmig. Es könnte auch die Gestalt einer Kreisplatte mit einer oder zwei oder mehreren Bohrungen haben. Dies ist jedoch für die Erfindung unerheblich.

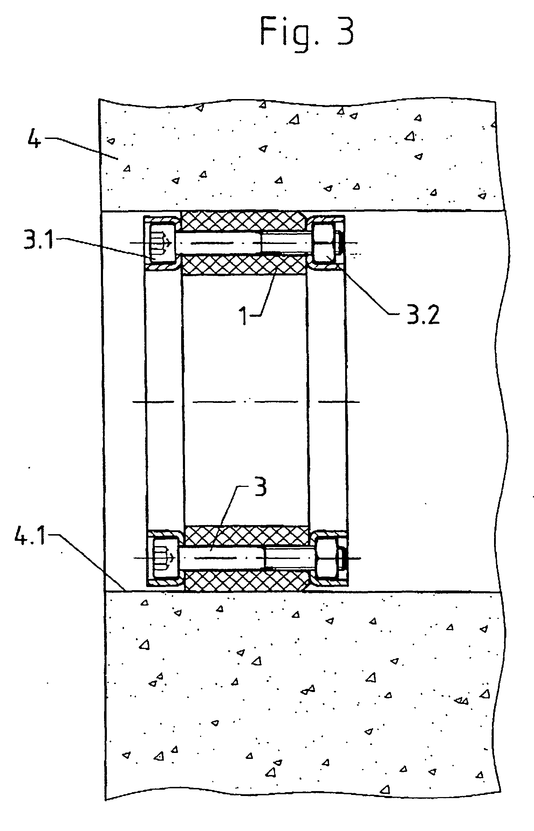

Figur 3 zeigt eine Dichtpackung, die alle Elemente der Dichtpackung der Figuren 1 und 2 umfaßt. Die Dichtpackung ist in die Öffnung einer Mauer 4 eingebaut. Die Maueröffnung 4.1 ist zylindrisch.

Wie man sieht, weist der Spannring 2 gemäß Figur 1 L-förmiges Profil auf. Dabei verläuft der eine Schenkel 2a in einer achssenkrechten Ebene, und der andere Schenkel 2b in einer achsparallelen Ebene.

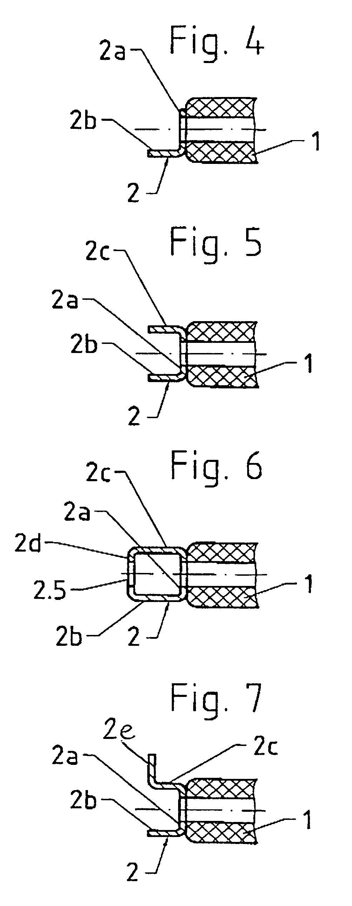

Spannring 2 gemäß Figur 5 weist U-Profil auf. Dabei verläuft der eine Schenkel 2a wiederum in einer achssenkrechten Ebene, und die beiden anderen Schenkel 2b, 2c in achsparallelen Ebenen. Schenkel 2b des Spannringes 2 ist im vorliegenden Falle radial innen angeordnet. Das Profil könnte jedoch derart gestaltet sein, daß sich Schenkel 2b nicht radial innen, sondern radial außen befindet.

Spannring 2 gemäß Figur 6 hat Kasten-Profil. Die Wände 2a, 2d verlaufen in achssenkrechten Ebenen, und die Wände 2b, 2c in achsparallelen Ebenen. Dabei weist Wand 2d einen Durchbruch 2.5 zum Einführen und Spannen einer Schraube beziehungsweise einer Mutter auf.

Spannring 2 gemäß Figur 7 hat ein abgewandeltes U-Profil. Hier ist ein Schenkel 2e an den Schenkel 2c angesetzt. Schenkel 2e ermöglicht eine Anlage an der Betonwand und verhindert hierdurch ein Verschieben der Dichtpackung in der Wandöffnung.

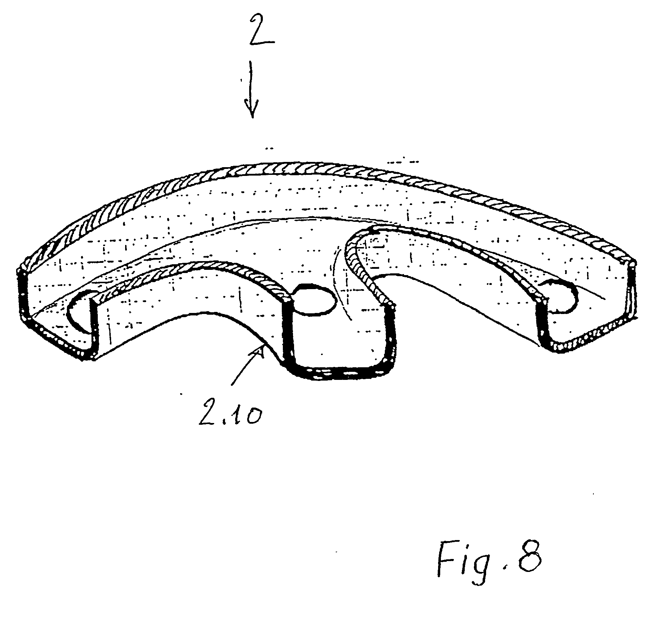

Das in Figur 8 dargestellte Spannringsegment 2 hat grundsätzlich einen U-förmigen Querschnitt - analog zur Ausführungsform gemäß Figur 5.

Es weist jedoch eine Abzweigung 2.10 auf, die - in Bezug auf das hier nicht gezeigte gummielastische Dichtelement nach innen verläuft. Im vorliegenden Falle erstreckt sie sich in radialer Richtung, bezogen auf den Hauptteil des Spannringsegmentes 2. Eine solche Ausführungsform ist geeignet für eine Dichtpackung, durch welche zwei Kabel oder Rohre hindurchgeführt werden. Auch andere Formen von Spannringsegmenten sind denkbar, auch solche mit mehr als einer einzigen Abzweigung.

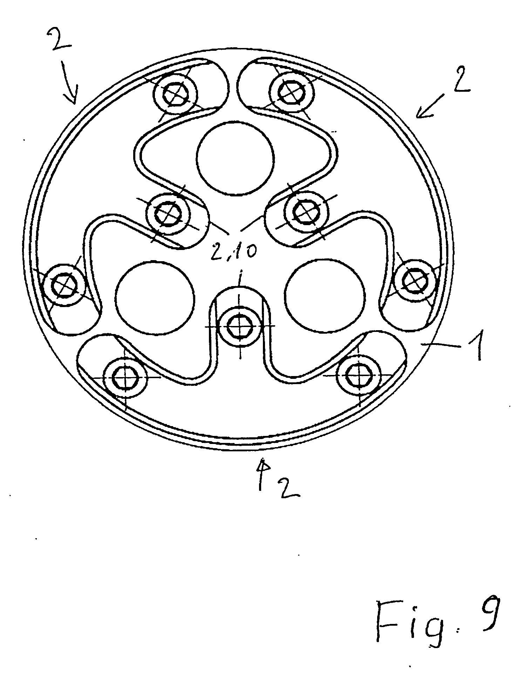

Eine praktische Ausführungsform ist in Figur 9 dargestellt. Das dort gezeigte Dichtelement 1 ist von drei Spannringsegmenten 2, 2, 2 abgedeckt, die jeweils eine Abzweigung 2.10 aufweisen. Die dort gezeigte Dichtpackung dient zum Hindurchführen von drei Kabeln. Sie könnte selbstverständlich auch Rohrleitungen aufnehmen.

## Patentansprüche

1. Dichtpackung zum Hindurchführen von Leitungen wie Kabeln, Medienleitungen;
1.1 mit einem gummielastischen Dichtelement (1), dessen Außenumfang kreisförmig ist;
1.2 an jeder Stirnseite des Dichtelementes (1) liegt ein zum Dichtelement (1) koaxialer Spannring (2.1, 2.2, 2.3, 2.4) an;
1.3 mit Spannschrauben (3), die in achsparalleler Richtung durch die Spannringe (2.1, 2.2, 2.3, 2.4) sowie durch das Dichtelement (1) hindurchgeführt sind, um das Dichtelement (1) in Richtung seiner Achse zu stauchen und damit zu verspannen;
1.4 die Spannringe (2.1, 2.2, 2.3, 2.4) sind aus Blech hergestellt;
1.5 jeder Spannring (2.1, 2.2, 2.3, 2.4) weist - in einem Axialschnitt gesehen - wenigstens einen achssenkrechten Schenkel (2a, 2d) und wenigstens einen achsparallelen Schenkel (2b, 2c) auf;
1.6 die Ringsegmente (2.1, 2.2, 2.3, 2.4) sind durch Abkröpfen des Bleches hergestellt;
**gekennzeichnet durch** die folgenden Merkmale:
1.7 die Spannringe sind aus Ringsegmenten (2.1. 2.2, 2.32.4) zusammengesetzt;
1.8 die Spannringe weisen L-Profil oder U-Protil oder Kasten-Profil auf.

2. Dichtpackung nach Anspruch 1, **dadurch gekennzeichnet, dass** zwischen zwei einander benachbarten Ringsegmenten (2.1, 2.2, 2.3, 2.4) ein Spalt verbleibt.

3. Dichtpackung nach Anspruch 1 oder 2, **dadurch gekennzeichnet, dass** die Spannringe (2.1, 2.2, 2.3, 2.4) Kasten-Profil aufweisen.

4. Dichtpackung nach Anspruch 1, **dadurch gekennzeichnet, dass** eine einzelne Abzweigung (2.10) in radialer Richtung verläuft.

## Claims

1. A seal packing for leading through lines such as cables, media lines;
1.1 having a rubber-elastic seal element (1), whose external periphery is circular;
1.2 a clamping ring (2.1, 2.2, 2.3, 2.4) coaxial to the seal element (1) presses against each front side of the seal element (1);
1.3 having clamping screws (3) which are led through the clamping rings (2.1, 2.2, 2.3, 2.4) and through the seal element (1) in the axial-parallel direction to compress the seal element (1) in the direction of its axis and thus clamp it;
1.4 the clamping rings (2.1, 2.2, 2.3, 2.4) are produced from sheet metal;
1.5 each clamping ring (2.1, 2,2, 2.3, 2.4) has - viewed in the axial section - at least one axial-perpendicular leg (2a, 2d) and at least one axial-parallel leg (2b, 2c);
1.6 the ring segments (2.1, 2.2, 2.3, 2.4) are produced by bending the sheet metal at right angles;
**characterized by** the following features:
1.7 the clamping rings are composed of ring segments (2.1, 2.2, 2.3, 2.4);
1.8 the clamping rings have L-profiles or U-profiles or box profiles.

2. The seal packing according to Claim 1, **characterized in that** a gap remains between two adjacent ring segments (2.1, 2.2, 2.3, 2.4).

3. The seal packing according to Claim 1 or 2, **characterized in that** the clamping rings (2.1, 2.2, 2.3, 2.4) have box profiles.

4. The seal packing according to Claim 1, **characterized in that** a single branch (2.10) runs in the radial direction.

## Revendications

1. Garniture d'étanchéité pour la traversée de conduites telles que des câbles ou des conduites de fluides,
1.1 avec un élément d'étanchéité élastique caoutchouteux (1), dont la circonférence extérieure est circulaire ;
1.2 une bague de serrage (2.1.2.2. 2.3, 2.4) coaxiale de l'élément d'étanchéité (1) est posée sur chaque face de l'élément d'étanchéité (1) ;
1.3 avec des vis de serrage (3), qui sont passées dans une direction d'axe parallèle à travers les bagues de serrage (2,1, 2.2, 2.3, 2.4) et l'élément d'étanchéité (1) pour compresser l'élément d'étanchéité (1) dans le sens de son axe et le serrer ainsi ;
1.4 les bague de serrage (2.1, 2.2, 2.3, 2.4) sont faites de tôle;
1.5 chaque bague de serrage (2.1, 2.2, 2.3, 2.4) présente, vue en coupe axiale, au moins un bras perpendiculaire à l'axe (2a, 2d) et au moins un bras parallèle à l'axe (2b, 2c) ;
1.6 les segments de bague (2.1, 2.2, 2.3, 2.4) sont formés par des pliages de la tôle ;
**caractérisée en ce que** :
1.7 les bagues de serrage sont composées de segments de bague (2.1, 2.2, 2.3, 2.4) ;
1.8 les bagues de serrage présentent un profil en L ou un profil en U ou un profil en caisson.

2. Garniture d'étanchéité selon la revendication 1, **caractérisée en ce qu'**il reste un intervalle entre deux segments de bague (2.1, 2.2, 2.3, 2.4) voisins.

3. Garniture d'étanchéité selon la revendication 1 ou 2, **caractérisée en ce que** les bagues de serrage (2.1, 2.2, 2,3, 2.4) présentent un profil en caisson.

4. Garniture d'étanchéité selon la revendication 1, **caractérisée en ce qu'**une seule bifurcation (2,10) est dirigée dans le sens radial.
